(19) Europäisches Patentamt
European Patent Office
Office européen des brevets

(11) **EP 4 607 619 A1**

(12) **EUROPEAN PATENT APPLICATION**

(43) Date of publication:
**27.08.2025 Bulletin 2025/35**

(21) Application number: **24204437.8**

(22) Date of filing: **03.10.2024**

(51) International Patent Classification (IPC):
***H01M 4/525*** (2010.01)  ***H01M 4/505*** (2010.01)

(52) Cooperative Patent Classification (CPC):
**H01M 4/505; H01M 4/525;** H01M 10/0525;
H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.02.2024 CN 202410194525**

(71) Applicant: **Jiangsu Zenergy Battery Technologies
Group
Co., Ltd.
Suzhou City, Jiangsu 215500 (CN)**

(72) Inventors:
• **CHEN, Jicheng**
**Changshu Suzhou City, Jiangsu, 215500 (CN)**
• **YU, Zhexun**
**Changshu Suzhou City, Jiangsu, 215500 (CN)**
• **YU, Hongjiang**
**Changshu Suzhou City, Jiangsu, 215500 (CN)**
• **JIANG, Kecheng**
**Changshu Suzhou City, Jiangsu, 215500 (CN)**

(74) Representative: **Studio Torta S.p.A.
Via Viotti, 9
10121 Torino (IT)**

(54) **POSITIVE ELECTRODE SHEET, LITHIUM ION SECONDARY BATTERY, AND EVTOL**

(57) The present disclosure provides a positive electrode sheet, including a positive electrode current collector and a coating layer applied to the surface of the positive electrode current collector, wherein the coating layer comprises a nickel-containing positive electrode material and a conductive agent, and the coating layer satisfies a relational expression as shown in Formula I: $3<a*c/100b<5$ Formula I; in Formula I, a is the molar percentage content of nickel in the nickel-containing positive electrode material, b is the mass percentage content of the conductive agent in the coating layer, and c is the one side areal density of the coating layer and the unit thereof is $mg/cm^2$. In the present disclosure, when the positive electrode sheet satisfies the formula shown in Formula I, the lithium ion battery prepared from the positive electrode sheet can obtain excellent DCR performance while ensuring the energy density and cycle life of a cell.

EP 4 607 619 A1

**Description**

**Technical Field**

The present disclosure relates to the technical field of lithium ion batteries, and in particular, to a positive electrode sheet, a lithium ion secondary battery, and EVTOL.

**Background**

With the development of modern society and the progress of science and technology, automobiles gradually become a mainstream tool for riding instead of walk, and with the increase of the number of automobiles, traffic is gradually becoming congested, and vertical takeoff and landing devices have gradually come into people's view. Year-to-year increase of oil price also causes an Electric Vertical Takeoff and Landing (EVTOL) device to become a pursue goal in science and technology. Currently, lithium ion batteries are the best choice for driving EVTOL. Due to the uniqueness of EVTOL, the requirements of taking high energy density, high power and long service life into account is put forward for the lithium ion batteries. In view of this, providing a lithium ion battery which can continuously provide a large power output while maintaining an energy density and has a long service life is a necessary condition for the development of the aircraft industry.

**Summary**

In view of this, the technical problem to be solved by the present disclosure is to provide a positive electrode sheet, a lithium ion secondary battery and EVTOL. A lithium ion battery prepared from the positive electrode sheet provided in some embodiments of the present disclosure can obtain excellent DCR performance while ensuring the energy density and cycle life of a cell.

The present disclosure provides a positive electrode sheet, including a positive electrode current collector and a coating layer applied to the surface of the positive electrode current collector, wherein the coating layer comprises a nickel-containing positive electrode material and a conductive agent, and the coating layer satisfies a relational expression as shown in Formula I:

$$3 < a*c/100b < 5 \qquad \text{Formula I}$$

in Formula I, a is the molar percentage content of nickel in the nickel-containing positive electrode material, b is the mass percentage content of the conductive agent in the coating layer, and c is the one side areal density of the coating layer and the unit thereof is $mg/cm^2$.

In some embodiments, the value range of a*c/100b is 3.35-4.8.

In some embodiments, $63\% \leq a \leq 92\%$.

In some embodiments, $2.5\% \leq b \leq 4\%$.

In some embodiments, $12 \leq c \leq 18$.

In some embodiments, the nickel-containing positive electrode material is selected from one or a mixture of two of lithium nickel cobalt manganese oxide and lithium nickel cobalt aluminum oxide; and

the positive electrode current collector is selected from one of aluminum foil and carbon-coated aluminum foil.

Some embodiments of the present disclosure further provide a preparation method for the positive electrode sheet, including the following steps:

mixing a nickel-containing positive electrode material, a conductive agent and an auxiliary agent, to obtain a slurry;

coating the slurry on the surface of a current collector and drying same, to obtain a positive electrode sheet; and

enabling a coating layer of the positive electrode sheet to satisfy a relational expression as shown in Formula I:

$$3 < a*c/100b < 5 \qquad \text{Formula I}$$

in Formula I, a is the molar percentage content of nickel in the nickel-containing positive electrode material, b is the mass percentage content of the conductive agent in the coating layer, and c is the one side areal density of the coating layer and the unit thereof is $mg/cm^2$.

The present disclosure also provides a lithium ion battery, including a positive electrode sheet, a negative electrode sheet, a separator and an electrolyte, wherein the positive electrode sheet is selected from the described positive electrode sheet.

In some embodiments, the negative electrode sheet includes a negative electrode current collector and a negative electrode coating layer coated on the negative electrode current collector;

wherein the negative electrode coating layer includes a negative electrode active material, the negative electrode active material is selected from one or more of graphite, soft carbon, hard carbon, mesocarbon microbeads, and a silicon-based material; and

the negative electrode current collector is selected from a copper foil.

The present disclosure also provides an EVTOL, including the lithium ion battery above.

Compared with the prior art, the present disclosure provides a positive electrode sheet, including a positive electrode current collector and a coating layer applied to the surface of the positive electrode current collector, wherein the coating layer includes a nickel-containing positive electrode material and a conductive agent, and the coating layer satisfies a relational expression as shown in Formula I: $3<a*c/100b<5$ Formula I; in Formula I, a is the molar percentage content of nickel in the nickel-containing positive electrode material, b is the mass percentage content of the conductive agent in the coating layer, and c is the one side areal density of the coating layer and the unit thereof is mg/cm$^2$. In the present disclosure, when the positive electrode sheet satisfies the formula shown in Formula I, the lithium ion battery prepared from the positive electrode sheet can obtain excellent DCR performance while ensuring the energy density and cycle life of a cell.

## Detailed Description of the Embodiments

The present disclosure provides a positive electrode sheet, including a positive electrode current collector and a coating layer applied to the surface of the positive electrode current collector, wherein the coating layer comprises a nickel-containing positive electrode material and a conductive agent, and the coating layer satisfies a relational expression as shown in Formula I:

$$3<a*c/100b<5 \qquad \text{Formula I}$$

in Formula I, a is the molar percentage content of nickel in the nickel-containing positive electrode material, b is the mass percentage content of the conductive agent in the coating layer, and c is the one side areal density of the coating layer and the unit thereof is mg/cm$^2$.

The positive electrode sheet provided in the present disclosure includes a positive electrode current collector. The present disclosure has no particular limitation on the type of the positive electrode current collector, and the positive electrode current collector can be one type of current collector known to a person skilled in the art, and in some embodiments, one of aluminum foil and carbon-coated aluminum foil.

In some embodiments of the present disclosure, the positive electrode sheet further includes a coating layer applied to the surface of the positive electrode current collector, wherein the coating layer includes a nickel-containing positive electrode material, a conductive agent and a binder.

The coating layer satisfies a relational expression as shown in Formula I:

$$3<a*c/100b<5 \qquad \text{Formula I}$$

in Formula I, a is the molar percentage content of nickel in the nickel-containing positive electrode material, b is the mass percentage content of the conductive agent in the coating layer, and c is the one side areal density of the coating layer and the unit thereof is mg/cm$^2$.

In the positive electrode sheet provided inthe present disclosure, the molar percentage content of nickel in the nickel-containing positive electrode material, the one side areal density of the coating layer, and the proportion of the conductive agent in the positive electrode coating layer all affect the energy density and power performance of a cell, but the effect thereof has certain limitations and correlation. Inventors of the disclosure have found that when the formula, i.e. $3<a*c/100b<5$ is satisfied, can the positive electrode sheet have both a high energy density and excellent power performance, and a large number of DOE experiments can also be avoided, thereby saving the research and development time and costs for batteries.

In some embodiments, when the value range of a*c/100b is 3.35-4.8, higher energy density, higher cycle life and more excellent power performance are achieved. For example, the value of a*c/100b may be 3.35, 3.4, 3.5, 3.6, 3.7, 3.8, 3.9, 4.0, 4.1, 4.2, 4.3, 4.4, 4.5, 4.6, 4.7, 4.8, or any value in the range 3.35-4.8.

The value of the molar percentage content a of nickel in the nickel-containing positive electrode material is 63%-92%, and may be 63%, 65%, 70%, 75%, 80%, 85%, 90%, 92%, or any value in the range 63%-92%. In some embodiments said the said value is any value in 65%-91%. In the nickel-containing positive electrode material, one Ni can provide deintercalation of two lithium ions, and thus increasing the Ni content can increase the discharge gram capacity of the material, and then can increase the capacity of the cell; and one Co can provide deintercalation of one lithium ion, and the improvement of Co in the cell can increase the rate performance of the material. The valence state of Mn does not alter, acts as a support element, and achieves to enhance thestructural stability. With the increase of the Ni content, the gram capacity of a ternary material is increased, but both the rate performance and the cycle performance of the material are gradually deteriorated; therefore, the Ni content in the positive electrode ternary material needs to be controlled within a suitable range, so as to satisfy the requirements of an EVTOL cell for energy density, cycle performance and power performance.

The value of the mass percentage content b of the conductive agent in the coating layer is 2.5%-4%, and may be 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, or any value in 2.5%-4%, and in some embodiments is 2.6%-3.3%. The content of the conductive agent in the coating layer may directly affect the electronic impedance of the positive electrode sheet and the energy density of the battery. With the increase of the content proportion of the conductive agent in the coating layer, the electronic impedance of the positive electrode sheet decreases, which is beneficial to the improvement of the power performance of the cell; however, with the increase of the content proportion of the conductive agent, the proportion of the positive electrode active material in the coating layer correspondingly decreases, thereby affecting the energy density of the cell. If the content of the positive electrode conductive agent is too high, the electronic impedance is not a factor limiting power, and further increasing the content of the conductive agent of the cell cannot obviously improve the power performance of the cell, but will reduce the energy density of the cell. If the content proportion of the conductive agent in the coating layer is too low, it is beneficial to improve the energy density of the cell; however, the electronic impedance increases with the decrease of the content of the conductive agent, thereby affecting the power performance of the cell. Therefore, the mass percentage of the conductive agent in the coating layer needs to be controlled within a suitable range.

The value range of the one side areal density c of the coating layer is 12-18, the unit thereof being $mg/cm^2$, and may be 12, 13, 14, 14.5, 15, 15.5, 16, 17, 18, or any value between 12-18, and 14-16 in some embodiments. When a lithium ion battery is discharged, lithium ions are deintercalated from a negative electrode material and are intercalated into the positive electrode material, and the transmission distance of the lithium ions is related to the one side areal density. Along with the increase of the one side areal density, the proportion of auxiliary materials in the cell decreases, the energy density of the cell increases, and also, the transmission distance of lithium ions increases, and the power performance decreases; if the one side areal density is too high, the transmission distance of the lithium ions becomes a limiting factor for large-rate discharge of the cell, and the power performance of the cell decreases rapidly; and if the one side areal density is too low, the power performance of the cell is improved, but as the proportion of auxiliary materials of the cell increases, the energy density of the cell decreases. Therefore, the one side areal density of the coating layer needs to be controlled within a suitable range.

In the positive electrode sheet, the proportion of the Ni content in the active material ternary material, the content of the conductive agent in the positive electrode sheet and the one side areal density of the positive electrode sheet all affect the cycle performance, power performance and energy density of the cell. In some embodiments of the present disclosure, mutual supplementation of the three factors achieves improvement of the energy density, high cycle performance and high power performance of the cell at the same time. Specifically, when the molar ratio of Ni element in the ternary material is increased, the gram capacity of the positive electrode material can be improved, thereby improving the energy density of the cell; however, if the molar proportion of Ni element is continuously increased, the structure of the positive electrode material will deteriorate, and changes from a layered structure to a spinel structure, and then continues to be converted into a non-conductive NiO-like phase, thereby reducing the power performance and cycle performance of the battery. By controlling the content of the conductive agent, the degradation of conductivity caused by surface phase change of the ternary material can be improved, thereby improving the power performance; and by controlling the one side areal density, the expansion thickness of the material can be reduced, thereby reducing the impedance increase during cycling, and improving the cycle performance and power performance of the battery. Based on this, the inventors have found that by optimizing the value of the molar ratio of Ni in the ternary material, the proportion of the conductive agent and the one side areal density, and enabling the coating layer to satisfy the relational expression as shown in Formula I, the energy density, the power performance and the cycle performance of the cell can all reach relatively excellent performance.

In summary, when the proportion of the nickel content in the ternary material, the proportion of the conductive agent and the one side areal density of the coating layer satisfy the requirements above, the lithium ion battery can take both energy density and excellent power performance into account.

Some embodiments of the present disclosure further provide a preparation method for the positive electrode sheet, including the following steps:

mixing a nickel-containing positive electrode material, a conductive agent and an auxiliary agent, to obtain a slurry;

coating the slurry on the surface of a current collector and drying the same, to obtain a positive electrode sheet; and

enabling a coating layer of the positive electrode sheet to satisfy a relational expression as shown in Formula I:

$$3 < a*c/100b < 5 \qquad \text{Formula I}$$

in Formula I, a is the molar percentage content of nickel in the nickel-containing positive electrode material, b is the mass percentage content of the conductive agent in the coating layer, and c is the one side areal density of the coating layer and the unit thereof is mg/cm$^2$.

Specifically, in some embodiments of the present disclosure, the auxiliary agent is selected from a binder.

In some embodiments of the present disclosure, the nickel-containing positive electrode material, the conductive agent and the auxiliary agent are dispersed in a solvent, and are stirred to form a positive electrode slurry which is uniformly and stably mixed. In some embodiments, the solvent is NMP. In order to ensure that excellent DCR performance is obtained while ensuring the energy density and cycle life of the cell, the molar percentage content of nickel in the nickel-containing positive electrode material and the mass percentage content of the conductive agent in the coating layer need to be controlled to satisfy $63\% \leq a \leq 92\%$ and $2.5\% \leq b \leq 4\%$, respectively.

The positive electrode slurry is uniformly coated on the positive electrode current collector, and drying and cold pressing are performed to obtain the positive electrode sheet.

In some embodiments of the present disclosure, during coating, the one side areal density of the coating is monitored in real time by using a weighing instrument, so that the one side areal density of the obtained coating layer satisfies the range of 12-18 mg/cm$^2$.

The positive electrode sheet prepared by the described method satisfies $3 < a*c/100b < 5$, so as to ensure that the cell obtains a high energy density, a long cycle life and excellent power performance.

Some embodiments of the present disclosure also provide a lithium ion battery, including a positive electrode sheet, a negative electrode sheet, a separator and an electrolyte, wherein the positive electrode sheet is selected from the positive electrode sheets as described above.

In some embodiments of the present disclosure, a preparation method for the lithium ion battery includes the following steps:

stacking a positive electrode sheet, a separator, a negative electrode sheet and a separator, in which an assembly method is any one of winding or laminating, and the electrolyte is injected into a dry cell to obtain a lithium ion secondary battery.

In the present disclosure, preparation methods for the separator, the electrolyte and the negative electrode sheet are not specifically limited, and a separator, an electrolyte and a negative electrode sheet for a lithium ion battery well known to a person skilled in the art may be used.

The negative electrode sheet comprises a negative electrode current collector and a negative electrode coating layer coated on the negative electrode current collector; in some embodiments of the present disclosure, the compaction density of the negative electrode coating layer is 1.35 g/cm$^3$. The negative electrode coating layer comprises a negative electrode active material, a conductive agent, a binder and a dispersant. In the present disclosure, the type selections of the negative electrode active material, the conductive agent, the binder and the dispersant are not specifically limited. In some embodiments, the negative electrode active material is selected from one or more of graphite, soft carbon, hard carbon, mesocarbon microbeads, and a silicon-based material; and the current collector is a copper foil in some embodiments. A preparation process for the negative electrode sheet includes: mixing a negative electrode active material, a conductive agent and a binder according to a certain ratio, adding deionized water and stirring same to form a negative electrode slurry which is uniformly and stably mixed; and uniformly coating the negative electrode slurry on the negative electrode current collector, and performing drying and cold pressing to obtain the negative electrode sheet.

In some embodiments the separator may be made of materials such as a polyethylene film, a polypropylene film, a polyvinylidene fluoride film, a non-woven fabric and the like.

The electrolyte includes a lithium salt and a solvent; in the present disclosure, the types of the lithium salt and the solvent are not specially limited, and can be selected according to actual requirements, wherein the lithium salt is LiPF$_6$, LiTFSI, and LiBF$_4$ in some embodiments.

EVTOL is also provided in the present disclosure, including the lithium ion battery as described above.

The positive electrode sheet provided in the present disclosure satisfies the formula shown in Formula I, and the lithium ion battery prepared from the positive electrode sheet can obtain excellent DCR performance while ensuring the energy density and cycle life of the cell.

In order to further understand the present disclosure, hereinafter, the positive electrode sheet, the preparation method for the positive electrode sheet, the lithium ion battery and the EVTOL provided in the present disclosure will be described with reference to embodiments, and the scope of protection of the present disclosure is not limited by the following embodiments.

Examples

1. Preparation process of a positive electrode sheet: A lithium-nickel-cobalt-manganate (NCM) ternary positive electrode active material, a conductive agent SP and a binder PVDF were mixed according to a certain ratio, in which the proportion of the binder was 1.1%, and the proportion of the conductive agent is as shown in Table 1, and the remaining was the ternary positive electrode active material; NMP was added, and stirring was performed to form a positive electrode slurry which was uniformly and stably mixed; and the positive electrode slurry was uniformly coated on a positive electrode current collector, and drying and cold pressing were performed to obtain a positive electrode sheet.

2. Preparation process for a negative electrode sheet: A negative electrode active material, conductive agents SP+CNTs and binders PAA+SBR were mixed according to a certain ratio (wherein the mass ratio of the negative electrode active material, SP, CNTs, PAA and SBR was 95.4%:1.5%:0.1%:2%:1%); deionized water was added, and stirring was performed to form a negative electrode slurry which was uniformly and stably mixed; and the negative electrode slurry was uniformly coated on a negative electrode current collector, and drying and cold pressing were performed to obtain a negative electrode sheet; wherein principal materials of the negative electrode material were a composite material of graphite and silicon oxide, and the compaction density thereof was 1.35 g/cm$^3$.

3. A polypropylene-based film was selected as a separator.

4. During assembly of a cell, the positive electrode sheet, the separator, the negative electrode sheet and the separator were sequentially arranged, and there were two assembly manners, i.e. winding and laminating.

5. As for an electrolyte, LiPF$_6$ was selected and dissolved in a mixed solvent containing ethylene carbonate, ethyl methyl carbonate and diethyl carbonate at a volume ratio of 1:1:1, the concentration thereof being 1.2 mol/L.

6. The electrolyte was injected into a dry cell, and after formation and aging, a lithium ion battery was obtained.

Performance tests were performed on the prepared battery, and the results are as shown in Table 1.

Table 1

| Examples | Ni molar percentage content in ternary material | Mass percentage content of conductive agent | One side areal density g/cm$^2$ | Energy density/Wh/Kg | Cycle life/cycle | DCR/-mΩ | a*c/100b |
|---|---|---|---|---|---|---|---|
| 1 | 83% | 3.0% | 15 | 254 | 1200 | 1.12 | 4.15 |
| 2 | 50% | 3.0% | 15 | 235 | 1350 | 1.02 | 2.50 |
| 3 | 63% | 3.0% | 15 | 254 | 1290 | 1.12 | 3.15 |
| 4 | 68% | 3.0% | 15 | 257 | 1230 | 1.16 | 3.40 |
| 5 | 88% | 3.0% | 15 | 259 | 1160 | 1.19 | 4.40 |
| 6 | 91% | 3.0% | 15 | 265 | 1080 | 1.24 | 4.55 |
| 7 | 92% | 3.0% | 15 | 267 | 820 | 1.25 | 4.60 |
| 8 | 94% | 3.0% | 15 | 273 | 600 | 1.26 | 4.70 |
| 9 | 83% | 1.5% | 15 | 257 | 1060 | 1.54 | 8.30 |

(continued)

| Examples | Ni molar percentage content in ternary material | Mass percentage content of conductive agent | One side areal density g/cm$^2$ | Energy density/Wh/Kg | Cycle life/cycle | DCR/-mΩ | a*c/100b |
|---|---|---|---|---|---|---|---|
| 10 | 83% | 2.5% | 15 | 255 | 1120 | 1.24 | 4.98 |
| 11 | 83% | 2.6% | 15 | 255 | 1180 | 1.22 | 4.79 |
| 12 | 83% | 3.3% | 15 | 253 | 1260 | 1.08 | 3.77 |
| 13 | 83% | 4% | 15 | 251 | 1290 | 1.06 | 3.11 |
| 14 | 83% | 4.50% | 15 | 249 | 1300 | 1.04 | 2.77 |
| 15 | 83% | 3.0% | 10 | 236 | 1420 | 1.02 | 2.77 |
| 16 | 83% | 3.0% | 12 | 244 | 1340 | 1.03 | 3.32 |
| 17 | 83% | 3.0% | 14 | 251 | 1240 | 1.09 | 3.87 |
| 18 | 83% | 3.0% | 16 | 256 | 1160 | 1.16 | 4.43 |
| 19 | 83% | 3.0% | 18 | 259 | 1100 | 1.28 | 4.98 |
| 20 | 83% | 3.0% | 20 | 263 | 1050 | 1.38 | 5.53 |

In Examples 1-20, the energy density of the cells in the examples was obtained on the basis of a model of 2614897 aluminum housing. A method of cyclic charging/discharging: charging to an upper limit voltage under a 1C constant current and a constant voltage (a material system with a Ni content of 70% or higher had an upper limit voltage of 4.25 V, and a material system with a Ni content of below 70% had an upper limit voltage of 4.4 V).

Lithium ion secondary batteries prepared in Examples 1-20 were subjected to energy density test and DCR test, in which the energy density was an energy density under conditions of 25°C and 1C; and DCR test conditions were 25°C, 50% SOC, and 2C discharged for 30 seconds.

It can be determined from Table 1 that all the parameters of Example 1 fall within the value ranges defined in the present disclosure, and the obtained energy density, cycle life and DCR of the battery are all at higher levels. In Examples 1-8, the molar proportions of Ni contents in ternary materials were compared. Examples 1-8 represent successive increase of the nickel content; along with the increase of the Ni content, the energy density of the cell continues to increase, but as the molar proportion of the Ni content increases to be higher than 92%, the cycle performance of the cell is continuously deteriorated, and the DCR is also getting larger and larger, which indicates that the power performance is getting worse and worse. In Example 2, 3<a*c/100b<5 is not satisfied, and the proportion of the Ni content in the ternary material is less than 63%, the obtained battery has excellent cycle performance and power performance, but low energy density. In Example 8, the molar percentage content of nickel in the ternary positive electrode active material does not satisfy 63%≤a≤92%, and the obtained battery has a high energy density, but the cycle performance and the power performance are significantly deteriorated. In Examples 1 and 3-7, 3<a*c/100b<5 is satisfied, and the proportion of nickel content, the proportion of the conductive agent and the one side areal density in the ternary material of the coating layer all satisfy the range requirements, and the battery cell exhibits relatively excellent comprehensive performance.

In Examples 1 and 9-14, the effects of the content of the conductive agent in an electrode sheet on the performance of the cell were compared. In Examples 9-14, when the proportion of the content of the conductive agent is gradually increased, the cycle performance of the battery is gradually increased, and the DCR is continuously decreased. However, it has been found that when the content of the conductive agent is at a certain extent, if the amount of the conductive agent is further increased, the energy density performance of the cell is significantly deteriorated instead. Thus, in Examples 1 and 10-13, when 3<a*c/100b<5 is satisfied, and the proportion of nickel content, the proportion of the conductive agent and the one side areal density in the ternary material of the coating layer all satisfy the range requirements, the cell exhibits relatively excellent comprehensive performance.

In Examples 15-20, the effects of the one side areal density of the electrode sheet on the performance of the cell were compared. In Examples 15-20, the one side areal density gradually increases, the energy density gradually increases, but the power performance and the cycle performance continuously decrease. In Example 15, when the one side areal density is less than 12 mg/cm$^2$, the obtained battery cell has excellent cycle performance and power performance, but the energy density is too low. In Example 20, when the one side areal density is higher than 18 mg/cm$^2$, the cycle performance of the obtained battery cell significantly deteriorates. In Examples 16-19, 3<a*c/100b<5 is satisfied, and the proportion of nickel content, the proportion of the conductive agent and the one side areal density in the ternary material of the coating layer all satisfy the range requirements, the cell exhibits relatively excellent comprehensive performance.

According to the analysis of the examples, when the molar ratio of Ni, the content of the conductive agent and the one side areal density satisfy $3<a*c/100b<5$, $63\%\le a\le 92\%$, $2.5\%\le b\le 4\%$ and $12\le c\le 18$, the cell has excellent comprehensive performance.

The contents above are only the preferred embodiments of the present disclosure. It should be pointed out that for a person of ordinary skill in the technical field, several improvements and refinements can be made without departing from the principle of the present disclosure, and these improvements and refinements shall also fall within the scope of protection of the present disclosure.

## Claims

1.  A positive electrode sheet, comprising a positive electrode current collector and a coating layer applied to the surface of the positive electrode current collector, wherein the coating layer comprises a nickel-containing positive electrode material and a conductive agent, and the coating layer satisfies a relational expression as shown in Formula I:

$$3<a*c/100b<5 \qquad \text{Formula I}$$

in Formula I, a is the molar percentage content of nickel in the nickel-containing positive electrode material, b is the mass percentage content of the conductive agent in the coating layer, and c is the one side areal density of the coating layer and the unit thereof is $mg/cm^2$.

2.  The positive electrode sheet according to claim 1, wherein the value range of a*c/100b is 3.35-4.8.

3.  The positive electrode sheet according to claim 1, wherein $63\%\le a\le 92\%$.

4.  The positive electrode sheet according to claim 1, wherein $2.5\%\le b\le 4\%$.

5.  The positive electrode sheet according to claim 1, wherein $12\le c\le 18$.

6.  The positive electrode sheet according to claim 1, wherein the nickel-containing positive electrode material is selected from one or a mixture of two of lithium nickel cobalt manganese oxide and lithium nickel cobalt aluminum oxide; and the positive electrode current collector is selected from one of aluminum foil and carbon-coated aluminum foil.

7.  A lithium ion battery, comprising a positive electrode sheet, a negative electrode sheet, a separator and an electrolyte, wherein the positive electrode sheet is selected from the positive electrode sheet according to any one of claims 1-6.

8.  The lithium ion battery according to claim 7, wherein the negative electrode sheet comprises a negative electrode current collector and a negative electrode coating layer coated on the negative electrode current collector;

    wherein the negative electrode coating layer comprises a negative electrode active material, the negative electrode active material is selected from one or more of graphite, soft carbon, hard carbon, mesocarbon microbeads, and a silicon-based material; and
    the negative electrode current collector is selected from a copper foil.

9.  The lithium ion battery according to claim 7, wherein $65\%\le a\le 91\%$.

10. EVTOL, comprising the lithium ion battery according to any one of claims 7-9.

Europäisches
Patentamt

European
Patent Office

Office européen
des brevets

# EUROPEAN SEARCH REPORT

**Application Number**

EP 24 20 4437

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 496 017 A2 (JIANGSU ZENERGY BATTERY TECH CO LTD [CN]) 22 January 2025 (2025-01-22) * claims 1-10 * * paragraph [0043]; example 1 * * pages 37-40 * | 1-10 | INV. H01M4/525 H01M4/505 |
| X | & CN 116 598 421 A (JIANGSU ZHENGLI NEW ENERGY BATTERY TECH CO LTD) 15 August 2023 (2023-08-15) * claims 1-10 * * paragraph [0043]; example 1 * * paragraphs [0037] - [0040] * ----- | 1-10 | |

**TECHNICAL FIELDS SEARCHED (IPC)**

H01M

The present search report has been drawn up for all claims

| Place of search | Date of completion of the search | Examiner |
|---|---|---|
| Munich | 28 May 2025 | González Junquera, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 4437

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2025

| Patent document cited in search report | | Publication date | Patent family member(s) | | Publication date |
|---|---|---|---|---|---|
| EP 4496017 | A2 | 22-01-2025 | CN | 116598421 A | 15-08-2023 |
| | | | EP | 4496017 A2 | 22-01-2025 |
| | | | JP | 2025015427 A | 30-01-2025 |
| | | | US | 2025029974 A1 | 23-01-2025 |

EPO FORM P0459

For more details about this annex : see Official Journal of the European Patent Office, No. 12/82